# EUROPEAN PATENT APPLICATION

(11) **EP 0 574 628 A1**
(43) Date of publication of application: **22.12.1993**
(21) Application number: 92305651.9
(22) Date of filing: 19.06.1992
(51) Int. Cl.: H02J 9/06

(54) **A modular uninterruptible power supply**

(71) Applicant: LUMEN ELECTRONICS CORPORATION, Yung Kang Hsiang, Tainan Hsien (TW)
(72) Inventor: Wong, John Kwong-Yiu, Tainan Hsien (TW)
(74) Representative: Baillie, Iain Cameron

(57) **Abstract**

A modular uninterruptible power supply (UPS) has a plurality of separable modules, for example an upper module, an intermediate module, and a lower module. Mating means for attaching the modules with each other include a pair of first plugs located on the upper module, a pair of first sockets located on the intermediate module that are capable of being engaged with the pair of first plugs, a pair of second plugs located on the intermediate module, and pair of second sockets located on the lower module that are capable of being engaged with the pair of second plugs. A connection bar is utilized to electrically connect the modules. In this way, the modular UPS can be easily moved, transported, installed, and detached.

## Description

### BACKGROUND OF THE INVENTION

The present invention relates generally to an uninterruptible power supply (UPS), and more particularly to a modular uninterruptible power supply consisting of several modules that can be easily installed and detached and can be moved and transported conveniently.

Nowadays, the uninterruptible power supply is prevalently used with important computer systems as a temporary power source to sustain the operation of the computer system when commercial power supplies are interrupted. Until now, all of the medium-power UPS'S that are commercially available, such as the 2 KVA, 3 KVA, 5 KVA, etc. The total weight of a UPS, including the transformer, heatsink, case, electrical circuit, filter,batteries etc., may reach 100 Kg or more. Consequently, it is difficult to install and transport a UPS, and the additional cost of manpower and transportation becomes a significant overhead. If a UPS breaks down, it is also difficult and expensive to send it back to the factory for repairs. Moreover, the UPS is so heavy and bulky that packing material is easily damaged during transportation. This subsequently causes rusting, deformation, and even electrical failure of the UPS. The losses due to extra costs and delayed delivery can be severe. Furthermore, professional or trained personnel are needed during the installation of a UPS due to its weight, enormous size and electrical compexity; otherwise people may be injured and the UPS may be damaged. These problems exist in this art, and an effective solution has been awaited for years.

### SUMMARY OF THE INVENTION

Therefore, the primary object of the present invention is to provide a modular UPS that consists of several separable modules. The modules can be easily and properly installed and detached without professional or trained personnel. In addition, each module is much lighter than the previous UPS, and can be moved and transported individually and conveniently.

In accordance with another feature of the present invention, the separable modules include an upper module, an intermediate module, and a lower module. The mating means include a pair of first plugs located on the upper module with a pair of first sockets located on the intermediate module that are capable of being engaged with the first plugs and a pair of second plugs located on the intermediate module with a pair of second sockets located on the lower module that are capable of being engaged with the second plugs.

### BRIEF DESCRIPTION OF THE DRAWINGS

The invention will now be described by way of example with reference to the accompanying drawings in which:-
Fig. 1 is an exploded perspective view of a modular uninterruptible power supply in accordance with one preferred embodiment of the present invention;
Fig. 2A is a side elevational view of the modular UPS of the present invention;
Fig. 2B is a partially cross-sectional view of a male plug and a female socket used in the UPS of Fig. 2A;
Fig. 3 is a schematic block diagram of the circuits in three modules of the UPS in accordance with one preferred embodiment of the present invention;
Fig. 4 is a partially exploded perspective view of the rear part of the UPS in accordance with one preferred embodiment of the present invention; and
Fig. 5 is another partially exploded perspective view of the rear part of the UPS in accordance with one preferred embodiment of the present invention.

### DETAILED DESCRIPTION OF THE PREFERRED EMBODIMENTS

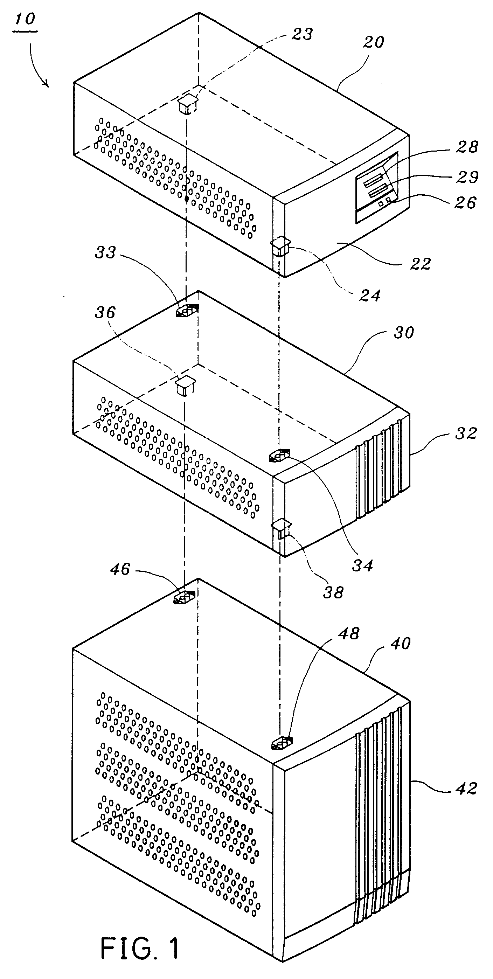

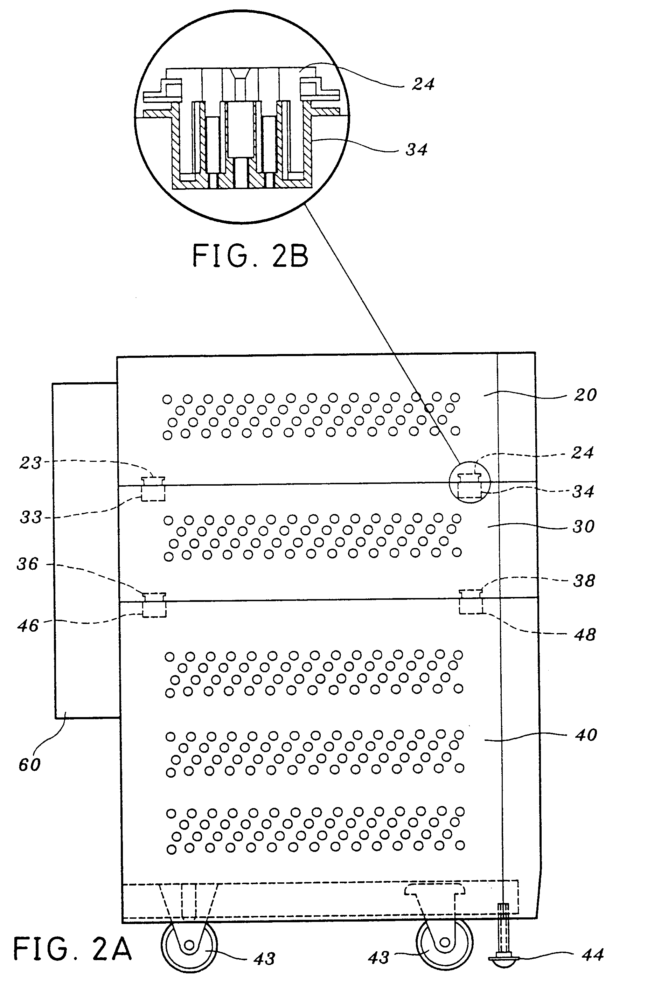

Referring now to Fig. 1, shown is a modular uninterruptible power supply 10 in accordance with on preferred embodiment of the present invention including three modules, i.e. and upper module 20, an intermediate module 30, and a lower module 40. The upper module 20 has a front plastic panel 22, two male plugs 23, 24 protruding downwards from its underside with an ON/OFF pushbutton switch 26, a load 28, and battery LED indicators 29 (seven levels) located on the front plastic panel 22. The intermediate module 30 has a front plastic panel 32, two female sockets 33,34 located in its upper surface, and two male plugs 36,38 protruding downwards from its underside. The lower module 40 has a front plastic panel 42, and two female sockets 46,48 located on its upper surface. With reference to Fig. 2A, the lower module 40 also has four wheels 43, and two fixing feet (44) on its underside.

Referring to Figs. 1, 2A, and 2B, when installing the three modules 20, 30, and 40, the male plugs 36,38 of the intermediate module 30 are first aligned with and then inserted into the female sockets 46,48 of the lower module 40, thereby the two modules 30,40 can be easily attached to each other in position. The male plugs 23,24 of the upper module 20 are then aligned with and inserted into the female sockets 33,34 of the intermediate module 30 thereby the two modules 20,30 can be easily attached to each other. In accordance with one preferred embodiment of the present invention, the male plugs 24,38 and the female sockets 34,48 are combined together to provide a safety grounding effect.

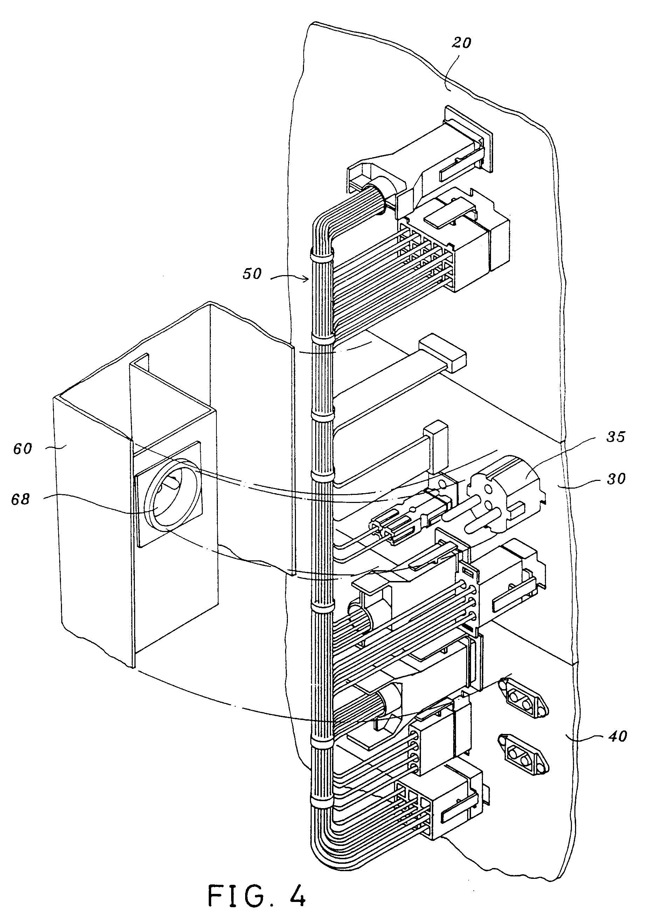

Referring to Fig. 4, after installing the three modules 20, 30, and 40, a connection bar 50 is then connected to the rear of the installed UPS. As can be seen in Fig. 4, the connection bar 50 includes a variety of plugs each having a different shape, and the rear parts of the three modules 20, 30, and 40 also include a plurality of differently-shaped sockets mating with their correspondingly -shaped plugs. This can prevent the plugs of the connection bar 50 from improperly insertion into the wrong sockets. Thus, fast and correct connection of the connection bar 50 can be easily achieved and ensured. The connection bar 50 also provide another safety grounding effect in addition to the electrical connection function for the three modules 20, 30, and 40.

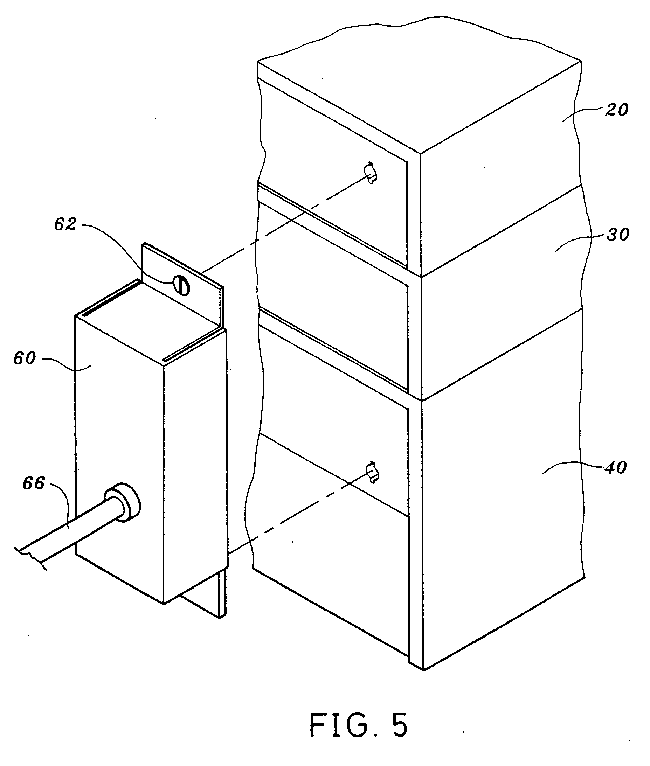

Referring to Figs. 4 and 5, after connecting the connection bar 50 correctly, a rear connector cover 60 then covers the connection bar 50, and is secured to the rear of the modules with two screws 62. The modular UPS will work normally when the line 66 provided on the rear connector cover 60 is coupled to a commercial power source, for example 220 V or 240 V, 50 Hz. It should be noted that the connection bar and the sockets at the back of the UPS have all been omitted in Fig. 5 for the convenience of sketching.Fig. 4 shows how to introduce the commercial power source into the UPS. A line 66 is extended into the rear connector cover 60 to couple with a power source socket 68, and a mating power source plug 35 is provided at the rear part of the intermediate modules, the rear connector cover 60 is secured to the modules, the power source plug 35 just inserts into the power source socket 68 so that the commercial power source is connected with the UPS. Such a design has a safety advantage. If the three modules are not properly installed, the modules have gaps between them such that the length of the connection bar 50 is elongated. However, the rear connector cover 60 is designed so that its length approximates the standard length of the connection bar 50 when it properly connected to the modules. Therefore, any elongation of the connection bar 50 will prevent the rear connector cover 60 from being secured to the modules, indicating that installation was not correct. In addition, if the rear connector cover 60 cannot be secured correctly, the commercial power source will not be connected with the UPS, and thereby safety is ensured. Moreover, another safety feature of the present invention is that the UPS will not work if any one plug along the connection bar 50 is not inserted into its socket. Thus, it is ensured that people will not get an electric shock.

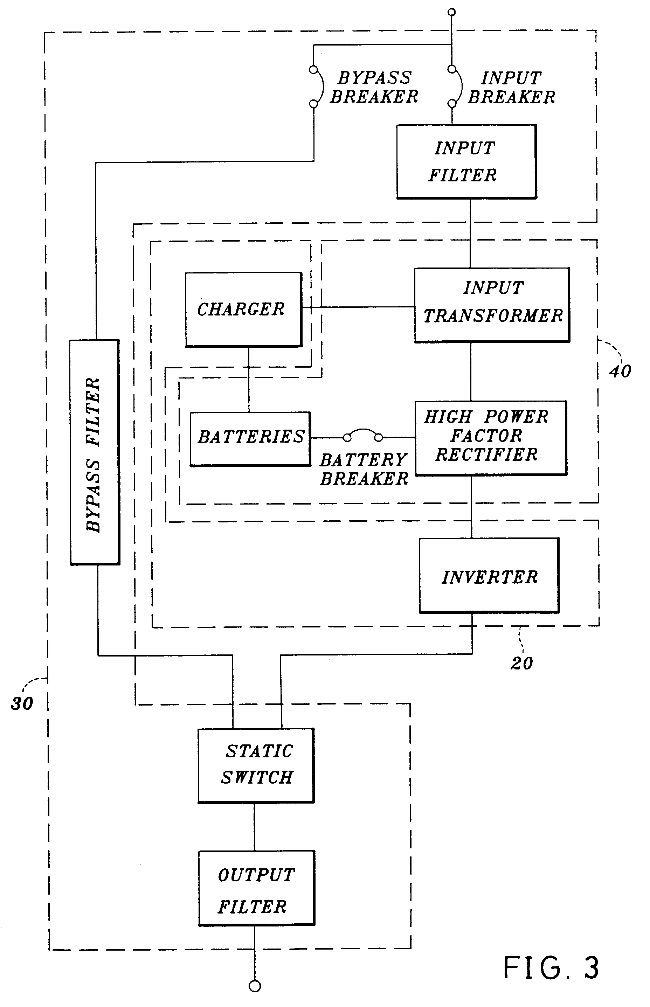

Fig. 3 shows the electrical circuits in the modules and their connections. A control circuit (not shown), an inverter (RS-232, not shown), and a charger are contained within the upper module 20. An A/C input breaker, a bypass breaker, an input filter, a bypass filter, a static switch, and an output filter are in the intermediate module 30. An input transformer, a high power factor rectifier, and batteries are provided in the lower module 40. Since the connections of these circuits are clearly shown in Fig. 3, further description is deemed unnecessary.

There are several advantages of the modular UPS of the present invention, over the prior art, including:
1. Separable: The uninterruptible power supply is designed to include three separable modules, and the weight of each module is less than 40 Kg, which is much lighter than the total weight of about 100 Kg of the previous uninterruptible power supply.
2. Easy to move or transport: The weight of each module is much lighter than that of the prior UPS. Therefore, it is easier to move or transport them, and thus manpower can be saved. In addition, damage to the UPS can be avoided, and the safety of the people who transport or move them can be ensured.
3. Capable of being mailed: Since the weight of each module is less than 40 Kg, it can be transported via the post office. This has the advantage of being convenient and fast.
4. No need for professional or trained personnel for installation: The modules can be easily assembled by engaging the mating plugs and sockets. The special connection bar can be installed easily and correctly without professional or trained personnel.
5. Easy to maintain and repair: The modules are separable, and can be easily detached to be mailed back to the factory for repairs.
6. Fast installation: Each of the modules are lightweight, compact, and easily distinguishable, and thus their assembly is easy and fast. The rear connector cover only needs two 1/4 turn screws to be fixed into place without special tools.
7. Low noise: Since the UPS is divided into three modules, interference sources are separated to reduce the opportunity of noise modulation, and thus interference can be minimized.
8. Safety: The strong plugs and sockets on the modules can be used to fix the modules in position and provide a safety grounding effect. In addition, the connection bar also provides another safety grounding effect. Furthermore, if any one plug of the connection bar is not connected properly, the commercial power source will not be introduced into the UPS. so people will not get an electric shock. The present invention is also provided with a pair of fixing feet to prevent the UPS from sliding due to earthquakes or slanted floors.

While the invention has been described in terms of what is presently considered to be the most practical and preferred embodiments, it is to be understood that the invention need not be limited to the disclosed embodiments. On the contrary, it is intended to cover various modifications and similar arrangements included within the scope of the appended claims, the scope of which should be accorded the broadest interpretation so as to encompass all such modifications and similar structures.

## Claims

1. A modular uninterruptible power supply comprising:
a plurality of separable modules;
mating means located on said modules respectively for attaching said modules with each other; and
means for electrically connecting said modules together.

2. A modular uninterruptible power supply as claimed in claim 1, wherein said plurality of separable modules includes an upper module, an intermediate module, and a lower module..

3. A modular uninterruptible power supply as claimed in claim 2, wherein said mating means includes a pair of first plugs located on said upper module, a pair of first sockets located on said intermediate module and capable of being engaged with said pair of first plugs, a pair of second plugs located on said intermediate module, and a pair of second sockets located on said lower module and capable of being engaged with said pair of second plugs.

4. A modular uninterruptible power supply as claimed in claim 3, wherein said engaged first plugs, first sockets, second plugs, and second sockets can further provide a grounding effect.

5. A modular uninterruptible power supply as claimed in claim 4, wherein said electrically connecting means includes a connection bar connected to said upper, intermediate and lower modules respectively to electrically connect said modules together, and a rear connector cover secured to said modules, covering said connection bar, and adapted to connect a commercial power source with said uninterruptible power supply.

6. A modular uninterruptible power supply as claimed in claim 5, wherein said rear connector cover includes a power source socket, and a line coupled to said power source socket and adapted to be connected with said commercial power source, and wherein said intermediate module includes a power source plug thereon capable of being inserted into said power source socket to introduce the power when said rear connector cover is secured to said modules.

7. A modular uninterruptible power source as claimed in claim 6, wherein the length of said rear connector cover mates with the length of said connection bar which is properly connected to said modules, in the case of said first, second plugs and sockets being engaged improperly, said modules having gaps therebetween, resulting in that the length of said connection bar will be elongated improperly, so that said rear connector cover cannot cover over said connection bar, and that said power source plug cannot insert into said power source socket to introduce the power, whereby the proper installation and the safety are ensured.

8. A modular uninterruptible power source as claimed in claim 7, wherein said connection bar has a plurality of connection plugs each having a different shape, and wherein said modules have a plurality of connection sockets each having a mating shape with one of said connection plugs, whereby the proper connection of said connection bar is ensured.
